# EUROPÄISCHE PATENTANMELDUNG

(11) **EP 0 993 100 A2**
(43) Veröffentlichungstag der Anmeldung: **12.04.2000**
(21) Anmeldenummer: 99119314.5
(22) Anmeldetag: 29.09.1999
(51) Int. Cl.: H02K 15/16

(54) **Verfahren zur Montage eines Elektromotors**

(30) Priorität: 05.10.1998 DE 19845683
(71) Anmelder: Mannesmann VDO Aktiengesellschaft, 60388 Frankfurt am Main (DE)
(72) Erfinder: Ganser, Otmar, 61476 Kronberg (DE)
(74) Vertreter: Klein, Thomas, Dipl.-Ing.

(57) **Zusammenfassung**

Das Verfahren dient zur Montage eines Elektromotors (10) mit einem Stator (34) und einem Rotor (32). Man ist bestrebt, den Luftspalt (38) möglichst schmal zu halten, um einen guten Wirkungsgrad des Motors (10) zu erreichen. Bauteiltoleranzen und Montagefehler erfordern jedoch eine großzügige Bemessung, um eventuell Berührungen zwischen Stator (34) und Rotor (32) zu vermeiden. Zur Verbesserung der Montagegenauigkeit wird vorgeschlagen, beim Ineinanderstecken von Rotor (32) und Stator (34) eine Zentrierhilfe (40, 42) an wenigstens drei Stellen in den Luftspalt (38) einzuführen, anschließend den Rotor (32) und den Stator (34) zueinander festzulegen und abschließend die Zentrierhilfe (40, 42) durch Öffnungen (48) im Motorgehäuse (20, 30) herauszuziehen.

## Beschreibung

Die Erfindung befaßt sich mit einem Verfahren zur Montage eines Elektromotors mit einem Stator und einem Rotor sowie mit einem zugehörigen Montagewerkzeug.

Die wesentlichen Bestandteile von Elektromotoren sind der Rotor, der gewöhnlich auf der in einem Gehäuse drehbar gelagerten Motorwelle sitzt, und der Stator, der in geeigneter Weise in dem Gehäuse festgelegt ist. Um die Drehbewegung des Rotors nicht zu behindern, ist zwischen dem Rotor und dem Stator ein Luftspalt notwendig. Je kleiner dieser Luftspalt ist, desto besser ist der Wirkungsgrad des Motors. Der Luftspalt kann jedoch nicht beliebig verkleinert werden, da man Bauteiltoleranzen und Montagetoleranzen berücksichtigen und daher den Luftspalt mit genügend Sicherheit ausreichend groß wählen muß. Bei der bisher üblichen Montage, bei welcher die Teile einfach zusammengesetzt werden, kann es vorkommen, daß sich die Teiletoleranzen und die Montagetoleranzen addieren und daher insgesamt relativ große Lagetoleranzen der Teile zueinander auftreten, die einen besonders breiten Luftspalt erforderlich machen.

Die Aufgabe der Erfindung besteht darin, ein Montageverfahren für Elektromotoren zu schaffen, das eine genauere Ausrichtung des Stators zu dem Rotor möglich macht und daher eine Verkleinerung des Luftspalts erlaubt.

Erfindungsgemäß wird die Aufgabe durch ein Verfahren gelöst, bei welchem vor, bei oder nach dem Ineinanderstecken des Rotors und des Stators eine Zentrierhilfe an wenigstens drei über den Umfang verteilten Stellen in den Luftspalt zwischen Rotor und Stator eingeführt wird, anschließend der Rotor und der Stator in der vorgesehenen Weise in ihrer vorbestimmten Lage zueinander festgelegt werden und abschließend die Zentrierhilfe durch im Gehäuse des Elektromotors vorgesehene Öffnungen herausgezogen wird.

Durch das Mitmontieren der Zentrierhilfe beim Zusammenbau des Elektromotors wird eine exakte Weite des Luftspaltes über den gesamten Umfang sichergestellt, so daß Montagetoleranzen, die bisher eine leicht exzentrische Lage des Stators zum Rotor bewirken konnten, vermeidbar sind. Es ist ferner möglich, in gewissem Maße für einen Ausgleich von Toleranzen der Bauteile selbst zu sorgen. Durch das neue Montageverfahren ist es möglich, das Nennmaß des Luftspaltes zu reduzieren, da aufgrund der verringerten Toleranzen nur geringere Sicherheiten bei der Wahl der Spaltbreite einkalkuliert werden müssen. Neben der Möglichkeit, die Breite des Luftspaltes zu reduzieren und damit den Wirkungsgrad des Motors zu verbessern, ist auch die über den gesamten Umfang nahezu konstante Spaltbreite für die Motoreigenschaften von Vorteil.

Vorzugsweise wird der Stator zur Lagefixierung zwischen zwei Gehäusehälften verspannt, in welchen die Motorwelle mit dem auf ihr sitzenden Rotor gelagert ist. Nach dem Verspannen der Gehäusehälften kann der Stator seine Lage bezüglich des Rotors nicht mehr ändern und die Montagehilfe kann entfernt werden. Da es schon vor dem Entfernen der Zentrierhilfe nicht mehr zu einer Fehlverlagerung des Stators kommen kann, können unter Umständen bisher unbedingt notwendige Führungsflächen für den Stator in den Gehäusehälften entfallen.

Um eine besonders genaue Zentrierung der zylindrischen Innenfläche des Stators in Bezug auf die zylindrische Außenfläche des Rotors zu erreichen, ist es vorteilhaft, beim Einführen der Zentrierhilfe eine radial zwischen dem Rotor und dem Stator wirkende Kraft an wenigstens drei verteilt liegenden Stellen des Umfangs des Luftspalts zu erzeugen. Solange der Rotor und der Stator noch nicht in ihrer Lage zueinander fixiert sind, sorgen diese radialen Kräfte für eine exakte zentrische Ausrichtung des Stators relativ zum Rotor. Die Radialkräfte zwischen dem Rotor und dem Stator können beispielsweise durch der Zentrierhilfe zugehörige, elastische Elemente zwischen Rotor und Stator oder durch Einschieben der Zentrierhilfe zugehörigen Keilelementen zwischen Rotor und Stator erzeugt werden.

Gegenstand der Erfindung ist auch ein Montagewerkzeug zur Durchführung eines der zuvor beschriebenen Verfahren. Erfindungsgemäß weist ein solches Werkzeug als Zentrierhilfe wenigstens drei Zentrierlaschen auf, die so angeordnet sind, daß sie zumindest teilweise in den Luftspalt eines zu montierenden Elektromotors einführbar sind. Zum Erreichen einer gleichmäßigen Spaltweite sind wenigstens drei Zentrierlaschen erforderlich, es können jedoch selbstverständlich auch mehr Zentrierlaschen vorgesehen sein.

Die exakte Ausrichtung des Stators mit Bezug auf den Rotor kann durch unterschiedliche Ausbildungen der Zentrierlaschen erreicht werden. Eine erste Möglichkeit besteht darin, die Dicke der Laschen so zu wählen, daß sich ein im wesentlichen spielfreier Sitz der Laschen zwischen dem Stator und dem Rotor ergibt. Mit derartigen Zentrierlaschen lassen sich bereits erhebliche Verbesserungen bei der Montagegenauigkeit erzielen.

Eine noch bessere Zentrierung erreicht man durch Laschen, die in der Lage sind, in dem Luftspalt eine zwischen dem Stator und dem Rotor wirkende radiale Kraft aufzubauen. Dies kann man beispielsweise dadurch erreichen, daß die Zentrierlaschen als radial federnde Elemente ausgebildet sind, die zwischen Rotor und Stator unter Spannung einschiebbar sind. Da die Krafteinwirkung an gleichmäßig über den Umfang verteilten Stellen erfolgt, nimmt der Stator mit seiner zylindrischen Innenfläche eine zentrische Lage bezüglich der zylindrischen Außenfläche des Rotors ein.

Statt der Federelemente können die Zentrierlaschen an ihren freien Enden Keilflächen besitzen, die ein Verklemmen der Laschenenden zwischen Stator und Rotor erlauben. Auch mit Hilfe derartiger Keilelemente ist eine exakte Ausrichtung des Stators mit Bezug auf den Rotor möglich.

Nachfolgend wird anhand der beigefügten Zeichnungen näher auf Ausführungsbeispiele der Erfindung eingegangen.

Es zeigen:
- Figur 1:: einen Längsschnitt eines Elektromotors einer elektrischen Lenkhilfe mit montierter Zentrierhilfe,
- Figur 2:: eine Ansicht der Zentrierhilfe nach Figur 1,
- Figur 3:: eine Stirnansicht der Zentrierhilfe nach Figur 2,
- Figur 4:: eine Detailansicht aus Figur 3,
- Figur 5:: eine Detailansicht einer Zentrierhilfe mit federnden Zentrierlaschen
- Figur 6:: einen Längsschnitt entsprechend Figur 1 mit einer weiteren Ausführungsform einer Zentrierhilfe.

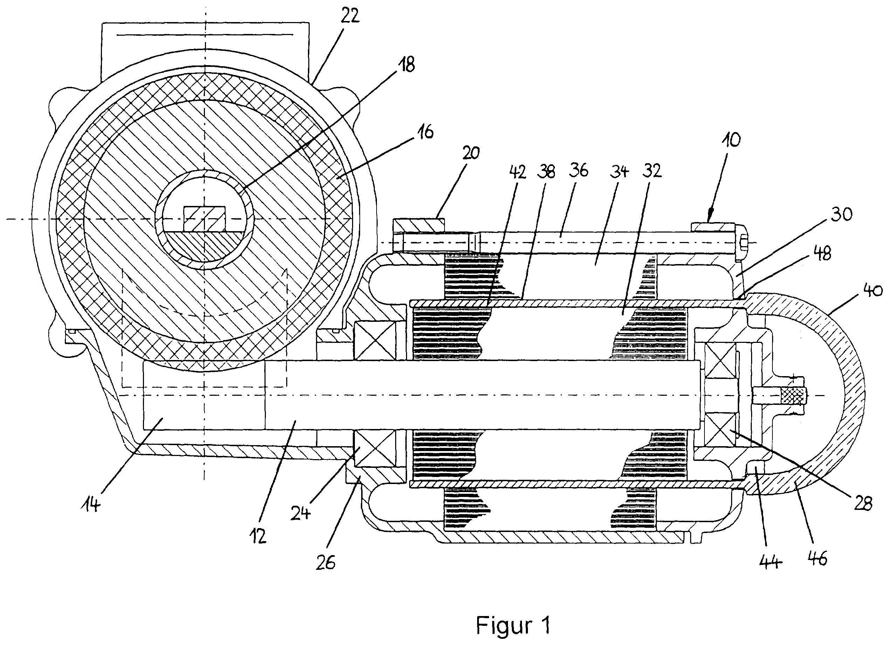

In Figur 1 ist ein elektrischen Antriebsmotor 10 dargestellt, der über eine an seiner Motorwelle 12 ausgebildete Schnecke 14 ein Schneckenrad 16 antreibt, das auf der Lenksäule eines Kraftfahrzeuges sitzt. Der elektrische Antriebsmotor 10 dient somit als elektrische Lenkhilfe für eine Fahrzeuglenkung.

Der Motor 10 besitzt ein Gehäuse 20, das an ein Getriebegehäuse 22 des Lenkgetriebes angeflanscht ist. Die Motorwelle 12 ist mit einem ersten Wälzlager 24 in einer ersten Gehäusehälfte 26 und mit einem zweiten Wälzlager 28 in einer zweiten, als Gehäusedeckel 30 ausgebildeten Gehäusehälfte gelagert. Auf der Motorwelle 12 sitzt ein Rotor 32, der in üblicher Weise aus Blechpaketen und Permanentmagneten aufgebaut ist.

Zentrisch um den Rotor 32 ist ein gewickelter Stator 34 angeordnet, der in dem ersten Gehäuseteil 26 aufgenommen ist und mit Hilfe von Spannschrauben 36 zwischen dem Gehäusedeckel 30 und dem ersten Gehäuseteil 26 eingespannt ist.

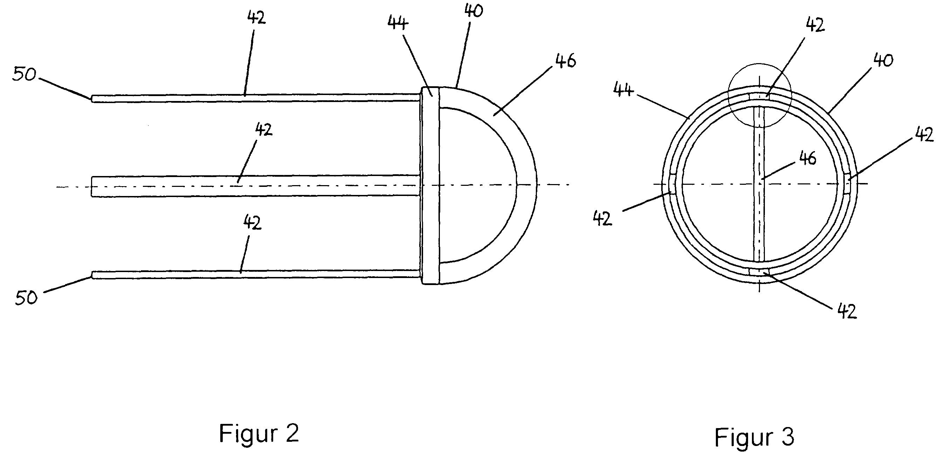

Zwischen der zylindrischen Innenfläche des Stators 34 und der zylindrischen Außenfläche des Rotors 32 ist ein Luftspalt 38 vorgesehen. Man ist bestrebt, die Breite dieses Luftspaltes 38 so gering wie möglich zu halten, da eine geringe Spaltbreite gleichbedeutend mit einem guten Wirkungsgrad des Motors ist. Um trotz unvermeidlicher Bauteiltoleranzen einen möglichst schmalen Luftspalt 38 vorsehen zu können, wird zum Zusammenbau eine Zentrierhilfe 40 als Montagewerkzeug verwendet, die im dargestellten Beispiel vier Zentrierlaschen 42 aufweist (siehe auch Figuren 2 bis 4). Die Zentrierlaschen 42 sind zur Stabilisierung an einem Ringteil 44 angeformt oder befestigt, das über einen Griff 46 verfügt. Bei montierter Zentrierhilfe 40 befinden sich das Ringteil 44 und der Griff 46 außerhalb des Getriebegehäuses 20, während die Zentrierlaschen 42 durch Öffnungen 48 in dem Gehäusedeckel 30 in den Luftspalt 38 ragen.

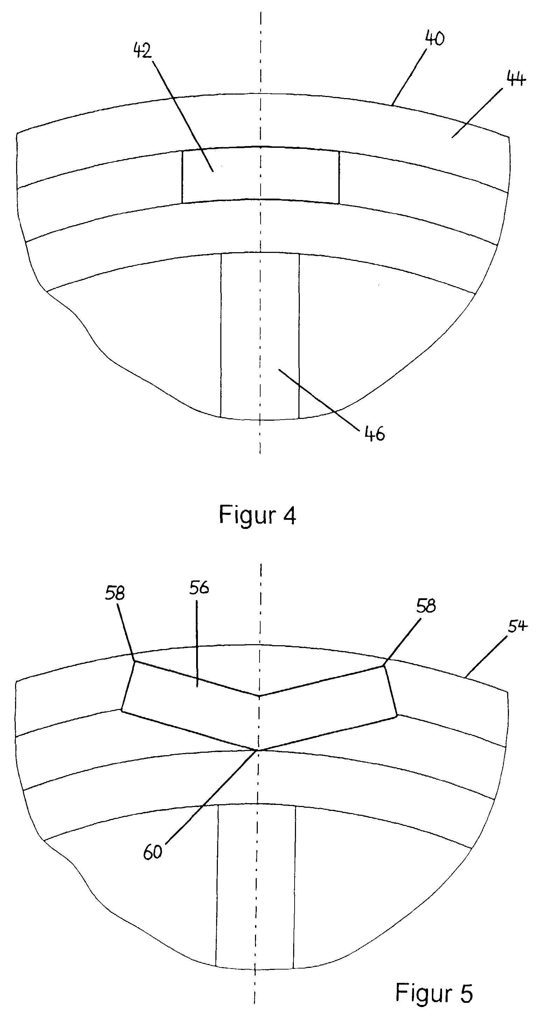

Aus den Figuren 3 und 4 ist ersichtlich, daß die Zentrierlaschen 42 ringsegmentförmige Querschnitte besitzen, wobei die radiale Breite so gewählt ist, daß die Zentrierlaschen 42 unter geringem Spiel in den Luftspalt 38 einführbar sind. Eine zu kleine radiale Breite der Zentrierlaschen 42 verschlechtert die Montagetoleranzen, während eine zu groß gewählte Dicke die Montage erschwert oder sogar zu einem Verklemmen der Zentrierlaschen zwischen Stator 34 und Rotor 32 führen kann. Die freien Enden 50 der Zentrierlaschen 42 können mit einer Fase oder einem Radius versehen sein, um das Einstecken der Zentrierhilfe 40 in den Luftspalt 38 zu erleichtern.

Die Zentrierhilfe 40 vermeidet bei noch nicht angezogenen Spannschrauben 36, daß sich der bezüglich des Motorgehäuses 20 noch nicht endgültig festgelegte Stator 34 relativ zum Rotor 32 verlagert, was in Anbetracht unvermeidbarer zusätzlicher Bauteiltoleranzen zu Berührungen zwischen Stator 34 und Rotor 32 im späteren Betrieb führen kann. Nach dem Anziehen der Spannschrauben 36 ist der Stator in radialer Richtung bezüglich des Rotors 32 endgültig fixiert, so daß die Zentrierhilfe 40 entfernt werden kann. Dies erfolgt durch einfaches Herausziehen der Zentrierlaschen 42 durch die Öffnungen 48 im Gehäusedeckel 30. Mit Hilfe der Zentrierhilfe 40 lassen sich beispielsweise problemlos Spaltbreiten von 0,2 mm realisieren.

Figur 5 zeigt eine Detailansicht einer weiteren Ausführungsform einer Zentrierhilfe 54, die über Zentrierlaschen 56 verfügt, die im Querschnitt V-förmige Winkelquerschnitte aufweisen. Die Schenkelenden 58 der Zentrierlaschen 56 weisen dabei radial nach außen, während die mittige Spitze 60 des Winkelprofils radial nach innen gerichtet ist. Die Zentrierlaschen 56 bestehen aus einem elastisch nachgiebigen Material, zum Beispiel Federstahl. Die Geometrie der Zentrierlaschen 56 ist so gewählt, daß die Schenkelenden 58 in radialer Richtung einen Abstand von der Spitze 60 des Winkelprofils besitzen, der größer als die gewählte Spaltweite ist. Beim Einführen der Zentrierlaschen 56 zwischen die zylindrische Innenfläche des Stators 34 und die zylindrische Außenfläche des Rotors 32 kommt es folglich zu einer elastischen Verformung der Zentrierlaschen 56, infolge derer zwischen den Flächen radial wirkende Kräfte aufgebaut werden. Da mehrere über den Umfang gleichmäßig verteilte Zentrierlaschen 56 vorgesehen sind, führen die entstehenden Radialkräfte zu einer exakten zentrischen Ausrichtung des Stators in Bezug auf den Rotor.

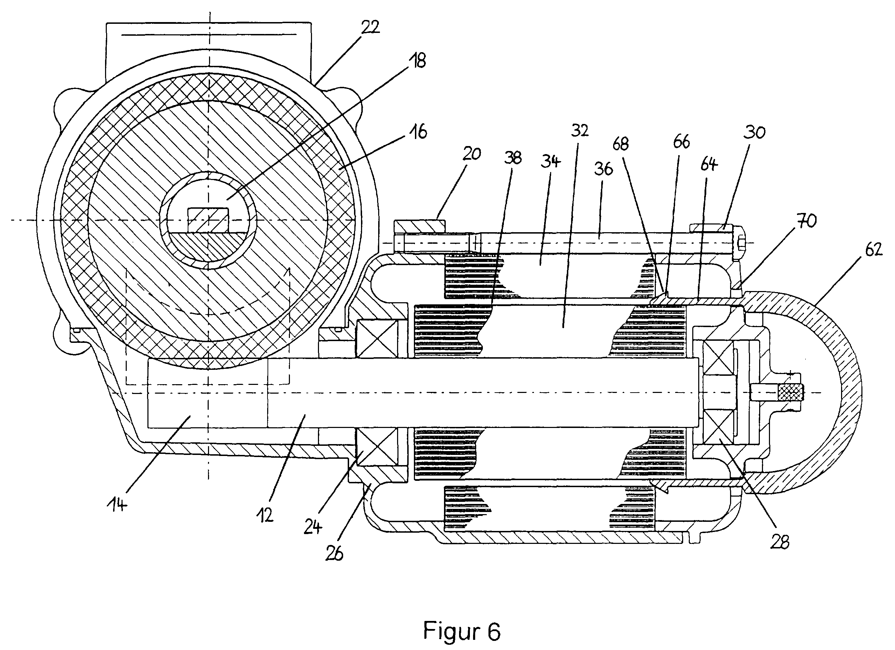

In Figur 6 ist eine weitere Zentrierhilfe 62 in montiertem Zustand dargestellt, deren Zentrierlaschen 64 an ihren Enden über Keilelemente 66 verfügen, die auf ihrer Innenseite an der zylindrischen Außenfläche des Rotors 32 anliegen und an ihren Außenseiten über eine Keilfläche 68 verfügen, die gegen die Vorderkante der zylindrischen Innenfläche des Stators gedrückt wird. Auch in diesem Fall wirken zwischen dem Rotor 32 und dem Stator 34 an mehreren über den Umfang verteilten Stellen Radialkräfte, die zu einer exakten Zentrierung führen.

Die Keilelemente 66 besitzen eine größere radiale Breite als der Luftspalt 38, so daß in dem Gehäusedeckel 30 entsprechend größere Öffnungen 70 vorgesehen sind, um ein problemloses Herausziehen der Zentrierlaschen 64 mit den Keilelementen 66 sicherzustellen.

Die vorstehend im Zusammenhang mit der Montage von Elektromotoren beschriebene Vorgehensweise, mittels einer Zentrierhilfe für eine exakte Positionierung zwischen einem Stator und einem Rotor zu sorgen, läßt sich grundsätzlich auch bei der Ausrichtung sonstiger relativ zueinander drehender Teile verwenden. Dabei ist es unerheblich, ob ein Teil oder beide Teile drehbar gelagert sind.

### Bezugszeichenliste

- 10: Antriebsmotor
- 12: Motorwelle
- 14: Schnecke
- 16: Schneckenrad
- 20: Gehäuse
- 22: Getriebegehäuse
- 24: Wälzlager
- 26: erste Gehäusehälfte
- 28: Motorwellenlager (zweites Wälzlager)
- 30: Gehäusedeckel
- 32: Rotor
- 34: Stator
- 36: Spannschrauben
- 38: Luftspalt
- 40: Zentrierhilfe
- 42: Zentrierlaschen
- 44: Ringteil
- 46: Griff
- 48: Öffnungen
- 50: freie Enden
- 54: Zentrierhilfe
- 56: Zentrierlaschen
- 58: Schenkelenden
- 60: Spitze
- 62: Zentrierhilfe
- 64: Zentrierlaschen
- 66: Keilelemente
- 68: Keilfläche
- 70: Öffnungen

## Patentansprüche

1. Verfahren zur Montage eines Elektromotors (10) mit einem Stator (34) und einem Rotor (32), dadurch gekennzeichnet, daß vor, bei oder nach dem Ineinanderstecken des Rotors (32) und des Stators (34) eine Zentrierhilfe (40; 54; 62) an wenigstens drei über den Umfang verteilten Stellen in den Luftspalt (38) zwischen Rotor (32) und Stator (34) eingeführt wird, anschließend der Rotor (32) und der Stator in der vorgesehenen Weise in ihrer vorbestimmten Lage zueinander festgelegt werden und abschließend die Zentrierhilfe (40; 54; 62) durch im Gehäuse (20, 30) des Elektromotors (10) vorgesehene Öffnungen (48; 70) herausgezogen wird.

2. Verfahren nach Anspruch 1, dadurch gekennzeichnet, daß der Stator (34) zur Lagefixierung zwischen zwei Gehäusehälften (26, 30) verspannt wird, in welchen die Motorwelle (12) mit dem auf ihr sitzenden Rotor (32) gelagert ist.

3. Verfahren nach Anspruch 1 oder 2, dadurch gekennzeichnet, daß beim Einführen der Zentrierhilfe (54; 62) an wenigstens drei verteilt liegenden Stellen des Umfangs des Luftspalts (38) eine radial zwischen dem Rotor (32) und dem Stator (34) wirkende Kraft erzeugt wird.

4. Verfahren nach Anspruch 3, dadurch gekennzeichnet, daß die Radialkräfte durch der Zentrierhilfe (54) zugehörige elastische Elemente (56) zwischen Rotor (32) und Stator erzeugt werden.

5. Verfahren nach Anspruch 3, dadurch gekennzeichnet, daß die Radialkräfte durch Einschieben von der Zentrierhilfe (62) zugehörigen Keilelementen (66, 68) zwischen Rotor (32) und Stator (34) erzeugt werden.

6. Nach einem Verfahren nach einem der Ansprüche 1 bis 5 montierbarer Elektromotor (10) mit einem Rotor (32), einem Stator (34) und einem Gehäuse (20), dadurch gekennzeichnet, daß das Gehäuse (20, 30) in der Flucht des Luftspaltes (38) Öffnungen (48; 70) zum Einstecken einer Zentrierhilfe (40; 54; 62) besitzt.

7. Elektromotor nach Anspruch 6, dadurch gekennzeichnet, daß in dem Gehäuse (20, 30) wenigstens drei über den Umfang der Projektion des Luftspaltes (38) im wesentlichen gleichmäßig verteilte Öffnungen (48; 70) vorgesehen sind.

8. Elektromotor nach Anspruch 6 oder 7, dadurch gekennzeichnet, daß die radiale Weite der Öffnungen (48, 70) wenigstens ungefähr gleich der Breite des Luftspaltes (38) ist.

9. Elektromotor nach einem der Ansprüche 6 bis 8, dadurch gekennzeichnet, daß die Öffnungen (48; 70) in einem Gehäusedeckel (30) angeordnet sind, der mit Hilfe von Spannschrauben (36) den Stator (34) axial gegen das Gehäuse (26) verspannt und ein Motorwellenlager (28) hält.

10. Montagewerkzeug zur Durchführung eines Verfahrens nach einem der Ansprüche 1 bis 5, dadurch gekennzeichnet, daß es als Zentrierhilfe (40; 54; 62) wenigstens drei Zentrierlaschen (42; 56; 64, 66) aufweist, die so angeordnet sind, daß sie zumindest teilweise in den Luftspalt (38) eines zu montierenden Elektromotors (10) einführbar sind.

11. Montagewerkzeug nach Anspruch 10, dadurch gekennzeichnet, daß die Dicke der Laschen (42) so gewählt ist, daß sich ein im wesentlichen spielfreier Sitz der Laschen (54) zwischen dem Stator (34) und dem Rotor (32) ergibt.

12. Montagewerkzeug nach Anspruch 10, dadurch gekennzeichnet, daß die Zentrierlaschen (56) als radial federnde Elemente ausgebildet sind, die unter Spannung zwischen Rotor (32) und Stator (34) einschiebbar sind.

13. Montagewerkzeug nach Anspruch 10, dadurch gekennzeichnet, daß die Zentrierlaschen (64) an ihren freien Enden Keilfächen (66, 68) besitzen, die ein Verklemmen der Laschenenden zwischen Stator (34) und Rotor (32) ermöglichen.

14. Montagewerkzeug nach einem der Ansprüche 10 bis 13, dadurch gekennzeichnet, daß die Zentrierlaschen (42; 56; 64) über ein Ringteil (44) miteinander verbunden sind, das mit einem Griff (46) versehen ist.
